# EUROPÄISCHE PATENTSCHRIFT

(11) **EP 2 389 607 B1**
(45) Veröffentlichungstag und Bekanntmachung des Hinweises auf die Patenterteilung: **03.06.2015**
(21) Anmeldenummer: 10700957.3
(22) Anmeldetag: 21.01.2010
(51) Int. Cl.: G02B 27/09

(54) **VORRICHTUNG ZUR STRAHLFORMUNG VON LASERDIODENARRAYS**
BEAM FORMING DEVICE FOR LASER DIODE ARRAYS
DISPOSITIF DE MISE EN FORME D'UN FAISCEAU DE RÉSEAUX DE DIODES LASER

(30) Priorität: 23.01.2009 DE 102009005963
(43) Veröffentlichungstag der Anmeldung: 30.11.2011
(73) Patentinhaber: LIMO Patentverwaltung GmbH & Co. KG, 44319 Dortmund (DE)
(72) Erfinder: FORNAHL, Udo, 48155 Münster (DE)
(74) Vertreter: Basfeld, Rainer
(86) Internationale Anmeldenummer: PCT/EP2010/000344
(87) Internationale Veröffentlichungsnummer: WO 2010/084001

(56) Entgegenhaltungen:
- EP-A1- 0 961 152
- EP-A1- 1 376 197
- EP-A2- 0 735 397
- US-A1- 2004 233 964
- US-A1- 2006 120 075

## Beschreibung

Die vorliegende Erfindung betrifft eine Vorrichtung zur Formung von Laserstrahlung, die in einer ersten, zu der Ausbreitungsrichtung der Laserstrahlung senkrechten Richtung zueinander beabstandete Teilstrahlen aufweist, insbesondere zur Formung von Laserstrahlung, die von einem Laserdiodenbarren ausgeht.

Definitionen: In Ausbreitungsrichtung des zu beeinflussenden Lichts meint die mittlere Ausbreitungsrichtung des Lichts, insbesondere wenn dieses keine ebene Welle ist oder zumindest teilweise konvergent oder divergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil, der keinen infinitesimal kleinen, sondern einen ausgedehnten Strahlquerschnitt aufweist.

Laserdiodenbarren weisen eine Mehrzahl von Emittern, beispielsweise 19 Emitter auf, die in der sogenannten Slow-Axis beabstandet zueinander angeordnet sind. Die Slow-Axis ist die eingangs genannte erste Richtung, in der sich die aktive Schicht der Halbleiterdiode erstreckt, wohingegen die Fast-Axis die dazu senkrechte Richtung ist. Beispielsweise weist ein jeder der Emitter eine Länge von etwa 150 µm in der Slow-Axis auf, wobei der Abstand zweier benachbarter Emitter zueinander in dieser Richtung etwa 400 µm beträgt. Das hat zur Folge, dass zwischen den von den einzelnen Emittern ausgehenden Teilstrahlen Dunkelbereiche vorhanden sind, die sich als nachteilig für die Brightness (spezifische Intensität) der Laserstrahlung erweisen.

Im Stand der Technik werden die von den einzelnen Emittern ausgehenden Teilstrahlen der Laserdiodenbarren durch Mikrooptiken in der Fast-Axis und zum Teil auch in der Slow-Axis kollimiert, ohne dass dabei die Periodizität der Strahlen der einzelnen Emitter manipuliert wird. Ein Beispiel dafür findet sich in der WO 2005/085934 A1. In diesem Stand der Technik werden danach je nach Anwendungszweck weitere strahlformende Optiken eingesetzt, um ein bestimmtes Strahlprofil zu erzielen. Dabei wird der Dunkelbereich zwischen den Emittern in Kauf genommen, was der erzielbaren Brightness eine Grenze setzt. Es entsteht somit infolge der Barrenstruktur eine konstruktiv gesetzte Grenze für die Brightness des gesamten Lasersystems, die von der physikalischen Grenze zählbar entfernt ist.

Ein weiteres Beispiel für eine strahlformende Optik findet sich in der DE 101 06 155 A1. Dort wird die von einem Laserdiodenbarren ausgehende Laserstrahlung in der Slow-Axis in zwei Teile aufgeteilt, wobei diese Teile anschließend in der Fast-Axis übereinander angeordnet werden. Dadurch wird der Querschnitt der Laserstrahlung von einer langgestreckt rechteckigen Form in eine weniger langgestreckt rechteckige Form überführt, die sich besser auf das Ende einer Lichtleitfaser fokussieren lässt.

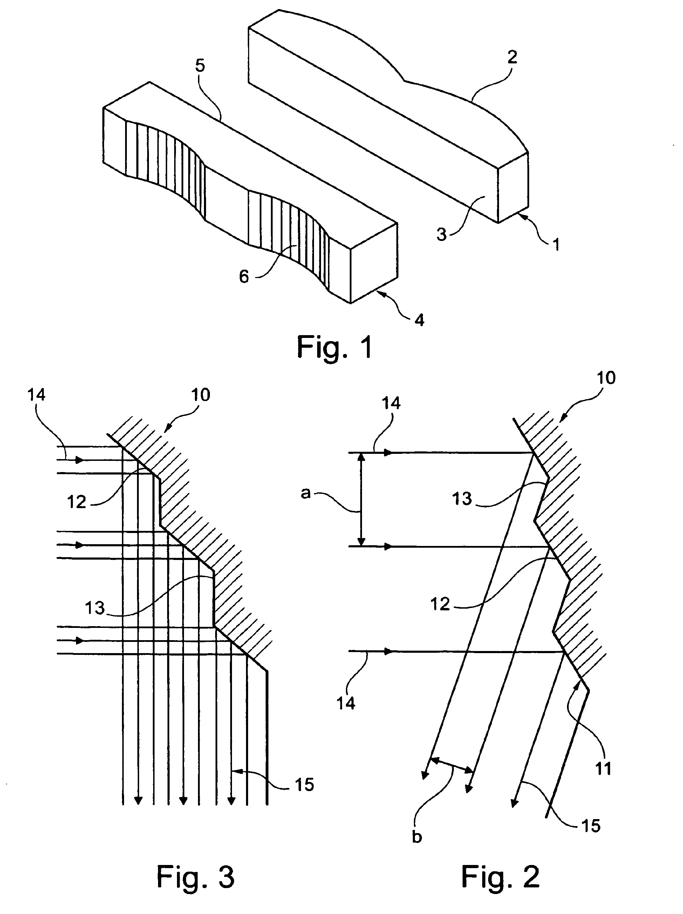

Ein weiteres Beispiel für eine strahlformende Optik findet sich in der bisher nicht veröffentlichten deutschen Patentanmeldung 10 2007 061 358.1. Die darin beschriebene Vorrichtung ist in Fig. 1 abgebildet und umfasst ein erstes Substrat 1 mit einer ersten, als Eintrittsfläche dienenden refraktiven Grenzfläche 2, die zumindest eine Mehrzahl der Teilstrahlen der zu formenden Laserstrahlung derart unterschiedlich ablenken kann, dass sie nach Hindurchtritt durch die erste Grenzfläche zumindest teilweise konvergenter zueinander verlaufen, als vor dem Hindurchtritt durch die erste Grenzfläche. Die Austrittsfläche 3 des ersten Substrats 1 ist plan ausgebildet. Die Vorrichtung umfasst weiterhin ein zweites Substrat 4 mit einer planen Eintrittsfläche 5 und einer als zweite refraktive Grenzfläche 6 dienenden Austrittsfläche, durch die die durch die erste Grenzfläche 2 hindurch getretene Laserstrahlung hindurch treten kann, wobei die zweite Grenzfläche 6 zumindest einige der Teilstrahlen derart ablenken kann, dass deren Konvergenz verringert wird. Dabei kann durch Verringerung oder Eliminierung des Abstands zwischen den Teilsstrahlen in der ersten Richtung der Dunkelbereich zwischen den einzelnen Teilstrahlen verkleinert werden, so dass die erzielbare Brightness näher an die physikalische Grenze gebracht werden kann.

Die beiden refraktiven Grenzflächen 2, 6 sind strukturiert und weisen insbesondere eine Vielzahl zueinander geneigter Flächen auf. Aufgrund der Tatsache, dass zwei strukturierte Flächen vorgesehen sind, ergibt sich aufgrund von Formabweichungen und Mikrorauhigkeiten dieser strukturierten Flächen eine geringe Effektivität (Performance) der aus dem Stand der Technik bekannten Vorrichtung.

Das der vorliegenden Erfindung zugrunde liegende Problem ist die Schaffung einer Vorrichtung der eingangs genannten Art, die effektiver ist.

Weitere Beispiele für strahlformende Optischen finden sich in der EP 1376197, welche eine Vorrichtung mit geneigten Zylinderlinsen offenbart, und der US 2004/0233967, welche eine Vorrichtung mit außermittig liegenden Zylinderlinsen offenbart.

Dies wird erfindungsgemäß durch eine Vorrichtung mit den Merkmalen des Anspruchs 1 erreicht. Die Unteransprüche betreffen bevorzugte Ausführungsformen der vorliegenden Erfindung.

Weiterhin ist die Vorrichtung so gestaltet, dass die Strahlparameter der Laserstrahlung verändert werden.

Gemäß der bevorzugten Ausgestaltung der Ausführungsform gemäß Anspruch 1 ist vorgesehen, dass das Substrat die Teilstrahlen drehen kann, insbesondere um die Ausbreitungsrichtung um 90° drehen kann. Beispielsweise kann dabei jede der beiden Grenzflächen eine Mehrzahl von Zylinderlinsen aufweisen, deren Zylinderachsen zu der Richtung, in der die Teilstrahlen nebeneinander angeordnet sind, geneigt sind, vorzugsweise um 45° geneigt sind. Auf diese Weise kann die Vorrichtung zusätzlich zur Verringerung der Abstände zwischen den Teilstrahlen die Funktion der Strahldrehung übernehmen, die beispielsweise durch die Vorrichtung gemäß EP 1 006 382 A erfüllt wird.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht einer Vorrichtung zur Formung von Laserstrahlung gemäß DE 10 2007 061 358.1;
- Fig. 2: eine schematische Detailansicht einer Beispielhaften Vorrichtung;
- Fig. 3: eine schematische Detailansicht einer weiteren beispielhaften Vorrichtung;
- Fig. 4: eine weitere schematische Ansicht der ersten beziehungsweise der zweiten beispielhaften Vorrichtung;
- Fig. 5: eine schematische Detailansicht einer dritten beispielhaften Vorrichtung;
- Fig. 6: eine perspektivische Ansicht einer Vorrichtung zur Strahldrehung gemäß EP 1 006 382 A;
- Fig. 7: einen beispielhaften Strahlengang bei mittig auftreffendem Teilstrahl;
- Fig. 8: einen beispielhaften Strahlengang bei außermittig auftreffendem Teilstrahl;
- Fig. 9: eine schematische Detailansicht einer Ausführungsform der erfindungsgemäßen Vorrichtung;
- Fig. 10: eine Vorderansicht der Ausführungsform.

In den Figuren werden gleiche oder funktional gleiche Teile mit gleichen Bezugszeichen versehen.

Fig. 2 zeigt eine Vorrichtung mit einem Substrat 10, das eine strukturierte Fläche 11 aufweist. Diese strukturierte Fläche 11 bildet eine Mehrzahl von reflektierenden Flächen 12 aus, zwischen denen Stufen 13 angeordnet sind.

Anstelle eines Substrats 10 können auch mehrere Substrate vorgesehen sein, die jeweils mindestens eine strukturierte Fläche aufweisen, an denen jeweils eine Mehrzahl von reflektierenden Flächen ausgebildet sind.

Von links in Fig. 2 einfallende Teilstrahlen 14 treffen auf die reflektierenden Flächen 12 und werden von diesen nach unten in Fig. 2 reflektiert. Durch die Stufen 13 zwischen den reflektierenden Flächen 12 verringert sich der Abstand a zwischen den Teilstrahlen 14 vor der Reflexion zu einem Abstand b zwischen den reflektierten Teilstrahlen 15 nach der Reflexion.

Fig. 3 zeigt eine vergleichbare Vorrichtung. Der Abstand b zwischen den reflektierten Teilstrahlen 15 kann durch die Höhe der Stufen 13 beeinflusst werden.

Die reflektierenden Flächen 12 können Metallspiegel oder Glas mit einer hochreflektierenden Beschichtung sein. Es besteht auch die Möglichkeit andere Materialien wie Halbleiter oder Keramiken zu verwenden. Weiterhin können die Reflexionen an den reflektierenden Flächen auch durch totale innere Reflektionen erfolgen.

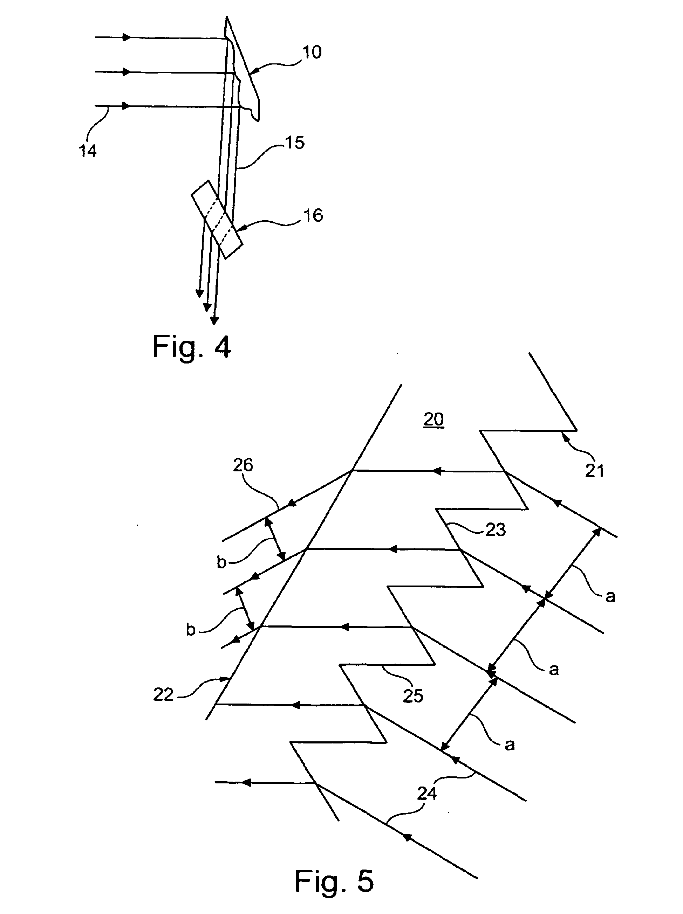

Aufgrund der unterschiedlich langen Strahlwege der einzelnen Teilstrahlen 14, 15 ist hinter dem Substrat 10 ein schiefgestelltes Slow-Axis-Kollimationsmittel 16 angeordnet (siehe Fig. 4). Durch die Schiefstellung werden die unterschiedlich langen Strahlwege berücksichtigt und kompensiert. Das Slow-Axis-Kollimationsmittel 16 kann dabei asphärisch ausgeführt sein.

Es besteht auch die Möglichkeit, vor dem Substrat 10 ein Slow-Axis-Kollimationsmittel anzuordnen, das in diesem Fall aber nicht schiefgestellt ist.

Bei der beispielhaftern Vorrichtung gemäß Fig. 5 ist ein transparentes Substrat 20 vorgesehen, das eine strukturierte als Eintrittsfläche dienende erste Grenzfläche 21 und eine plane als Austrittsfläche dienende zweite Grenzfläche 22 umfasst. Die erste Grenzfläche 21 weist Prismenabschnitte 23 auf, auf die die einfallenden Teilstrahlen 24 auftreffen. In der abgebildeten Vorrichtung entsprechen die Prismenabschnitte 23 einander und sind parallel zueinander ausgerichtet. Die Teilstrahlen 24 werden durch die Prismenabschnitte 23 derart gebrochen, dass sie im Innern des Substrats parallel zur gedachten Grundfläche 25 der Prismenabschnitte 23 verlaufen. Nach abermaliger Brechung an der planen zweiten Grenzfläche 22 ist der Abstand a zwischen den Teilstrahlen 24 vor dem Hindurchtritt durch das Substrat zu dem Abstand b zwischen den Teilstrahlen 26 verringert.

Bei dem vorgenannten Strahlverlauf parallel zueinander beziehungsweise zu den gedachten Prismengrundflächen werden die Strahlparameter der Teilstrahlen nicht verändert.

Durch Veränderung der Topologie der ersten und/oder der zweiten Grenzfläche können die Strahlparameter verändert werden. Beispielsweise können die Strahlen eine geringere Divergenz bei größerem Durchmesser oder umgekehrt aufweisen. Dabei besteht durchaus die Möglichkeit, dass die Prismenabschnitte 23 und Grundflächen derart ausgebildet sind oder die Teilstrahlen 24 unter einem derartigen Winkel auf die Prismenabschnitte 23 auftreffen, dass die Teilstrahlen 24 im Innern des Substrats nicht parallel zu den Grundflächen 25 verlaufen.

Für die Kollimation der Teilstrahlen 24, 26 ist aufgrund der unterschiedlich langen Strahlwege ebenfalls ein schiefgestelltes Slow-Axis-Kollimationsmittel sinnvoll.

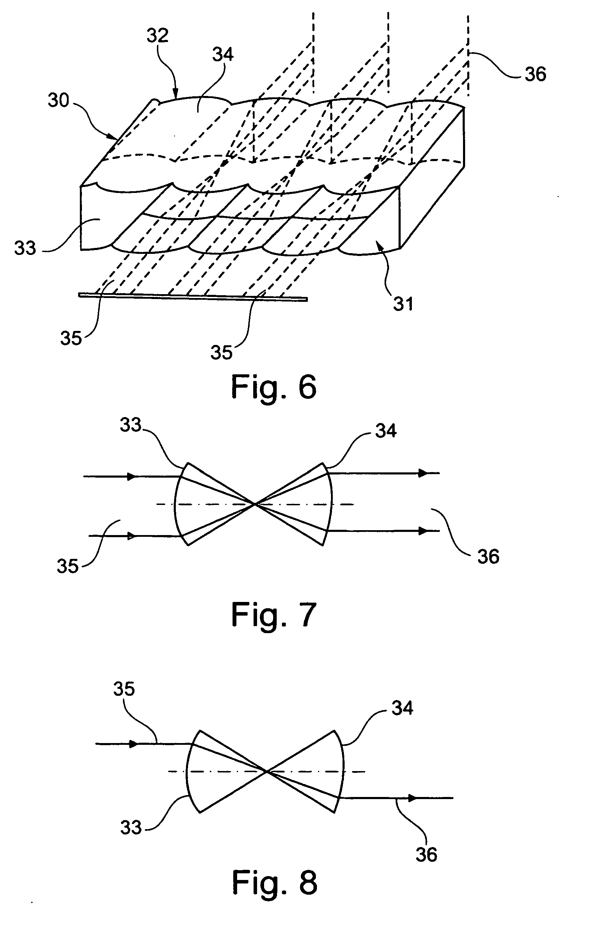

Fig. 6 zeigt eine perspektivische Ansicht einer Vorrichtung zur Strahldrehung gemäß EP 1 006 382 A. Diese umfasst ein Substrat 30 mit einer strukturierten als Eintrittsfläche dienenden ersten Grenzfläche 31 und einer strukturierten als Austrittsfläche dienenden zweite Grenzfläche 32, wobei jede der Grenzfläche 31, 32 eine Mehrzahl von Zylinderlinsen 33, 34 aufweist, die unter einem Winkel von 45° zu der Richtung angeordnet sind, in der die Teilstrahlen 35 nebeneinander angeordnet sind.

Die Zylinderlinsen 33, 34 der Grenzfläche 31, 32 bilden eine Teleskopanordnung. Jeweils einer der Teilstrahlen 35 trifft auf eine der Zylinderlinsen 33. Durch eine derartige Vorrichtung werden die Teilstrahlen 35 um die Ausbreitungsrichtung um 90° gedreht (siehe die gedrehten Teilstrahlen 36 in Fig. 6).

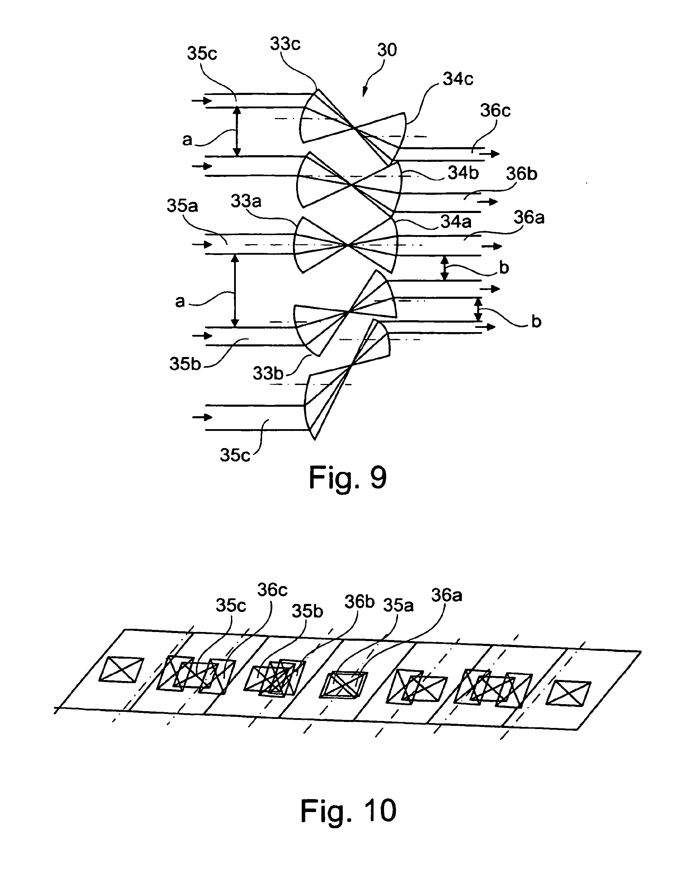

Fig. 7 zeigt, dass ein mittig auf eine der Zylinderlinsen 33 auftreffender Teilstrahl 35 die gegenüberliegende Zylinderlinse 34 als Teilstrahl 36 auch wieder mittig verlässt. Fig. 8 zeigt, dass ein außermittig, insbesondere hier oberhalb der Mitte auftreffender Teilstrahl 35 die gegenüberliegende Zylinderlinse 34 als Teilstrahl 36 ebenfalls wieder außermittig, allerdings hier unterhalb der Mitte verlässt. Diesen Effekt macht sich die in Fig. 9 abgebildete Ausführungsform einer erfindungsgemäßen Vorrichtung zunutze.

Die Zylinderlinsen 33 auf der ersten Grenzfläche 31 sind derart ausgedehnt und angeordnet, dass zwar der mittlere Teilstrahl 35a mittig auf die entsprechende Zylinderlinse 33a auftrifft, die weiter oben und weiter unten angeordneten Teilstrahlen 35b, 35c jedoch außermittig auftreffen. Insbesondere vergrößert sich der Grad der Außermittigkeit bei zunehmendem Abstand von der Mitte der ersten Grenzfläche 31.

Dadurch werden die Teilstrahlen 35b, 35c zur Mitte hin abgelenkt, so dass sie aus den entsprechend ausgedehnten und angeordneten Zylinderlinsen 34a, 34b, 34c näher beieinander austreten. Die Abstände a zwischen den Teilstrahlen 35a, 35b, 35c vor dem Hindurchtritt werden also zu den Abständen b zwischen den Teilstrahlen 36a, 36b, 36c verringert. Dabei ist der Pitch (Mittenabstand) der Zylinderlinsen 34a, 34b, 34c kleiner als derjenige der Zylinderlinsen 33a, 33b, 33c, weil die Teilstrahlen zusammenrücken.

Fig. 10 zeigt schematisch die Verschiebung der austretenden Teilstrahlen 36a, 36b, 36c relativ zu den eintretenden Teilstrahlen 35a, 35b, 35c nach innen.

## Patentansprüche

1. Vorrichtung zur Formung von Laserstrahlung, die von einem Laserdiodenbarren ausgeht, die in einer ersten, zu der Ausbreitungsrichtung der Laserstrahlung senkrechten Richtung zueinander beabstandete Teilstrahlen (35a, 35b, 35c; 36a, 36b, 36c) aufweist, umfassend ein Substrat (30) mit einer als Eintrittsfläche dienenden ersten refraktiven Grenzfläche (31) und einer als Austrittsfläche dienenden zweiten refraktiven Grenzfläche (32), wobei die erste und die zweite Grenzfläche (31, 32) derart gestaltet sind, dass nach dem Hindurchtritt durch das Substrat (30) die Abstände (b) der Teilstrahlen (35a, 35b, 35c; 36a, 36b, 36c) zueinander kleiner als vor dem Hindurchtritt sind, wobei das Substrat (30) die Teilstrahlen um die Ausbreitungsrichtung (354, 35b, 35c; 36a, 36b, 36c) drehen kann, wobei jede der beiden Grenzflächen (31, 32) eine Mehrzahl von Zylinderlinsen (33a, 33b, 33c; 34a, 34b, 34c) aufweist, deren Zylinderachsen zu der ersten Richtung, in der die Teilstrahlen (35a, 35b, 35c; 36a, 36b, 36c) nebeneinander angeordnet sind, geneigt sind, und wobei die Zylinderlinsen (33a, 33b, 33c; 34a, 34b, 34c) derart gestaltet und/oder angeordnet sind, dass die auf in der Mitte der Grenzflächen (31, 32) angeordnete Zylinderlinsen (33a; 34a) die Teilstrahlen (35a; 36a) mittig auftreffen, wohingegen auf außerhalb der Mitte der Grenzflächen (31, 32) angeordnete Zylinderlinsen (35b, 35c; 36b, 36c) die Teilstrahlen (35b, 35c; 36b, 36c) außermittig auftreffen.

2. Vorrichtung nach Anspruch 1, **dadurch gekennzeichnet, dass** das Substrat (30) die Teilstrahlen (35a, 35b, 35c; 36a, 36b, 36c) um die Ausbreitungsrichtung um 90° drehen kann.

3. Vorrichtung nach einem der Ansprüche 1 oder 2, **dadurch gekennzeichnet, dass** die Zylinderachsen der Zylinderlinsen (33a, 33b, 33c; 34a, 34b, 34c) zu der ersten Richtung, in der die Teilstrahlen (35a, 35b, 35c; 36a, 36b, 36c) nebeneinander angeordnet sind, um 45° geneigt sind.

4. Vorrichtung nach einem der Ansprüche 1 bis 3, **dadurch gekennzeichnet, dass** die Zylinderlinsen (33a, 33b, 33c; 34a, 34b, 34c) derart gestaltet und/oder angeordnet sind, dass nach dem Hindurchtritt durch das Substrat die Abstände (b) der Teilstrahlen (36a, 36b, 36c) zueinander kleiner als vor dem Hindurchtritt sind.

## Claims

1. Device for shaping laser radiation that emerges from a laser diode bar, having partial beams (35a, 35b, 35c; 36a, 36b, 36c) spaced apart from one another in a first direction, which is perpendicular to the propagation direction of the laser radiation, comprising a substrate (30) having a first refractive interface (31), which serves as an entrance surface, and a second refractive interface (32), which serves as an exit surface, wherein the first and the second interface (31, 32) are/is configured in such a way that the distances (b) between the partial beams (35a, 35b, 35c; 36a, 36b, 36c) are smaller after passage through the substrate (30) than before said passage, wherein the substrate (30) can rotate the partial beams (35a, 35b, 35c; 36a, 36b, 36c) about the propagation direction, wherein each of the two interfaces (31, 32) has a plurality of cylindrical lenses (33a, 33b, 33c; 34a, 34b, 34c), the cylinder axes of which are inclined with respect to the first direction, in which the partial beams (35a, 35b, 35c; 36a, 36b, 36c) are arranged alongside one another, and wherein the cylindrical lenses (33a, 33b, 33c; 34a, 34b, 34c) are configured and/or arranged in such a way that the partial beams (35a; 36a) impinge centrally on cylindrical lenses (33a; 34a) arranged in the center of the interfaces (31, 32), whereas the partial beams (35b, 35c; 36b, 36c) impinge eccentrically on cylindrical lenses (35b, 35c; 36b, 36c) arranged outside the center of the interfaces (31, 32).

2. Device according to Claim 1, **characterized in that** the substrate (30) can rotate the partial beams (35a, 35b, 35c; 36a, 36b, 36c) by 90° about the propagation direction.

3. Device according to either of Claims 1 and 2, **characterized in that** the cylinder axes of the cylindrical lenses (33a, 33b, 33c; 34a, 34b, 34c) are inclined by 45° with respect to the first direction, in which the partial beams (35a, 35b, 35c; 36a, 36b, 36c) are arranged alongside one another.

4. Device according to any of Claims 1 to 3, **characterized in that** the cylindrical lenses (33a, 33b, 33c; 34a, 34b, 34c) are configured and/or arranged in such a way that the distances (b) between the partial beams (36a, 36b, 36c) are smaller after passage through the substrate than before said passage.

## Revendications

1. Dispositif destiné à la mise en forme d'un rayonnement laser provenant d'une barre de diodes laser, qui comporte des faisceaux partiels (35a, 35b, 35c ; 36a, 36b, 36c) espacés les uns des autres dans une première direction perpendiculaire à la direction de propagation du rayonnement laser, comprenant un substrat (30) ayant une première surface de séparation (31) de réfraction jouant le rôle de surface d'incidence et une seconde surface de séparation (32) de réfraction jouant le rôle de surface de sortie, dans lequel les première et seconde surfaces de séparation (31, 32) sont conçues de manière à ce que, après la traversée du substrat (30), les espacements (b) des faisceaux partiels (35a, 35b, 35c ; 36a, 36b, 36c) les uns par rapport aux autres soient plus petits qu'avant la traversée, dans lequel le substrat (30) peut faire tourner les faisceaux partiels (35a, 35b, 35c ; 36a, 36b, 36c) autour de la direction de propagation, dans lequel chacune des deux surfaces de séparation (31, 32) comprend une pluralité de lentilles cylindriques (33a, 33b, 33c ; 34a, 34b, 34c) dont les axes de cylindre sont inclinés par rapport à la première direction dans laquelle les faisceaux partiels (35a, 35b, 35c ; 36a, 36b, 36c) sont agencés côte à côte, et dans lequel les lentilles cylindriques (33a, 33b, 33c ; 34a, 34b, 34c) sont conçues et/ou agencées de manière à ce que les faisceaux partiels (35a ; 35b) soient incidents de manière centrale sur des lentilles cylindriques (33a ; 34a) disposées au centre des surfaces de séparation (31, 32), tandis que les faisceaux partiels (35b, 35c ; 36b, 36c) sont incidents de manière décentrée sur des lentilles cylindriques (35b, 35c ; 36b, 36c) disposées à l'extérieur du centre des surfaces de séparation (31, 32).

2. Dispositif selon la revendication 1, **caractérisé en ce que** le substrat (30) peut faire tourner les faisceaux partiels (35a, 35b, 35c ; 36a, 36b, 36c) de 90° autour de la direction de propagation.

3. Dispositif selon l'une quelconque des revendications 1 ou 2, **caractérisé en ce que** les axes de cylindre des lentilles cylindriques (33a, 33b, 33c ; 34a, 34b, 34c) sont inclinés de 45° par rapport à la première direction dans laquelle les faisceaux partiels (35a, 35b, 35c ; 36a, 36b, 36c) sont agencés côte à côte.

4. Dispositif selon l'une quelconque des revendications 1 à 3, **caractérisé en ce que** les lentilles cylindriques (33a, 33b, 33c ; 34a, 34b, 34c) sont conçues et/ou agencées de manière à ce que, après la traversée du substrat, les espacements (b) des faisceaux partiels (36a, 36b, 36c) les uns par rapport aux autres soient plus petits qu'avant la traversée.
